Europäisches Patentamt

**European Patent Office**

Office européen des brevets

(11) Numéro de publication: **0 164 284**
**A1**

## (12) DEMANDE DE BREVET EUROPEEN

(21) Numéro de dépôt: 85400911.5

(22) Date de dépôt: 10.05.85

(51) Int. Cl.⁴: **B 60 M 1/20,** H 01 B 17/60

(30) Priorité: **14.05.84 FR 8407977**

(43) Date de publication de la demande: **11.12.85**
**Bulletin 85/50**

(84) Etats contractants désignés: **AT BE CH DE FR GB IT LI LU NL SE**

(71) Demandeur: **LABORATOIRE D'ETUDES ET DE RECHERCHES CHIMIQUES L.E.R.C. S.A., Chemin des Hamaides, F-59230 St. Amand les Eaux (FR)**

(72) Inventeur: **Bertin, Philippe, 7/9 rue Blanche, F-59800 Lille (FR)**
Inventeur: **Bresson, Roger, 8 Impasse Germaine, F-78420 Carrieres Sur Seine (FR)**

(74) Mandataire: **Ecrepont, Robert, Cabinet Ecrepont 12 Place Simon Vollant (Porte de Paris), F-59800 Lille (FR)**

(54) **Bras de maintien d'un fil conducteur aérien.**

(57) L'invention se rapporte à un bras de maintien d'un conducteur aérien d'alimentation électrique d'un mobile.

Il est caractérisé en ce que le corps est constitué d'une âme (7) en matériau alvéolaire et, recouvrant chacune l'une des faces supérieure (8) et inférieure (9) de l'âme (7), de deux peaux (10, 11) qui, quant à elles, sont constituées de matériau composite obtenu par polymérisation de tissus techniques imprégnés de résines.

Application à l'industrie du matériel d'alimentation électrique des mobiles et notamemnt des trains à très grande vitesse.

1

## BRAS DE MAINTIEN D'UN FIL CONDUCTEUR AERIEN

L'invention se rapporte à un bras de maintien d'un fil conducteur aérien sous lequel doit pouvoir se déplacer à grande vitesse un dispositif, tel une perche ou un pantographe, qui, par contact roulant ou glissant, permet l'alimentation électrique d'un mobile, tel une locomotive, un tramway ou un trolley-bus.

Elle s'applique plus particulièrement mais non exclusivement aux bras de maintien dits bras de rappel comprenant un corps sensiblement rectiligne dont une extrémité, qui est généralement recourbée vers le bas, se termine par une tête à laquelle le conducteur est suspendu, directement ou par l'intermédiaire d'un fil catenaire simple ou double et dont seule l'autre extrémité est associée à un support.

Cette association au support doit alors assurer à elle seule que la tête est énergiquement maintenue à hauteur convenable et ce malgré l'importance du porte à faux du bras.

Elle vise également, plus spécialement mais sans que cela soit limitatif, les bras de maintien qui sont conducteurs de l'électricité.

Actuellement, pour que ces bras de maintien soient résistants, ils sont réalisés en métal.

Malgré un choix de ce métal parmi les métaux dits légers, du fait de leur longueur qui est généralement de mille cinq cents millimètres environ, ces bras atteignent un poids important, ce qui engendre une réaction de l'ordre de un kilogramme au niveau de leur tête.

Notamment, dans le cas des bras de rappel, dont la tête n'est donc pas suspendue, cette réaction se traduit, pour le dispositif d'alimentation du mobile, par la rencontre de points de contact plus durs lors de son passage au niveau des différentes têtes de suspension du conducteur aérien.

Il en résulte des chocs ainsi que des ruptures du contact et donc tant une mauvaise captation du courant électrique que la création d'arcs électriques entraînant une détérioration hative du conducteur et du dispositif d'alimentation du mobile.

Un résultat que l'invention vise à obtenir est un bras de maintien du type précité qui tout en étant extrêmement résistant soit ultra-léger afin de rendre sinon négligeables du moins très faibles les réactions dues au poids de ce bras.

A cet effet, elle a pour objet un tel bras notamment caractérisé en ce que le corps est constitué :

- d'une âme en matériau alvéolaire se présentant sous la forme d'un nid d'abeille et,

- recouvrant chacune l'une des faces supérieure et inférieure de l'âme, de deux peaux qui, quant à elles, sont constituées de matériau composite obtenu par polymérisation de tissus techniques imprégnés de résines.

Elle sera bien comprise à l'aide de la description ci-après faite, à titre d'exemple non limitatif, en regard du dessin ci-annexé qui représente schématiquement :

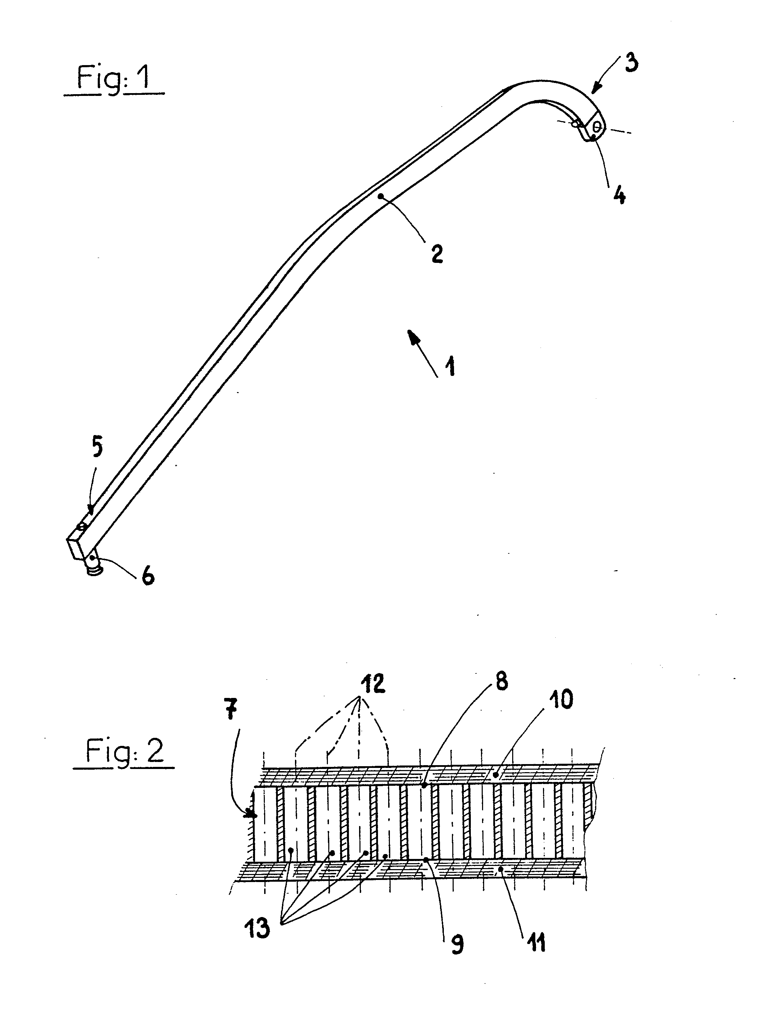

- figure 1: un bras de rappel vu en perspective,

- figure 2: en vue partielle, le corps du bras vu en coupe par un plan vertical longitudinal.

En se reportant au dessin, on voit que le bras 1 comprend un corps 2 sensiblement rectiligne, dont une extrémité 3 est éventuellement recourbée vers le bas avant de se terminer par une tête 4 en matériau inoxydable, à laquelle par tout moyen connu est suspendu le conducteur (non représenté) et dont l'autre extrémité 5 reçoit un moyen 6 en vue de son association à un support (non représenté).

Ce moyen 6 est de tout type connu, apte à assurer à lui seul que la tête 4 est énergiquement maintenue à hauteur convenable malgré l'importance du porte à faux du bras.

Le corps 2 du bras 1 peut porter localement au moins un moyen d'isolation électrique ou être entièrement conducteur de l'électricité.

Afin d'être extrêmement léger, selon la caractéristique essentielle de l'invention, le corps est constitué d'une âme 7 en matériau alvéolaire et, recouvrant chacune l'une des faces supérieure 8 et inférieure 9 de l'âme 7, de deux peaux 10, 11 qui, quant à elles, sont constituées de matériau composite obtenu par polymérisation de tissus techniques imprégnés de résines.

La structure peut être asymétrique.

Le matériau composite peut être à base de fibres ou de tissus de verre mais, de préférence, pour conférer au bras une grande raideur alliée à une grande légèreté, le matériau composite est à base de tissus de fibres de carbone imprégnés de résine epoxy et ce tissu est choisi et orienté de manière à offrir le principal de sa résistance dans le sens longitudinal du bras.

Dans un mode préféré de réalisation, au lieu d'être une mousse, le matériau alvéolaire dont est constitué l'âme, est un nid d'abeille placé debout c'est à dire avec les axes longitudinaux 12 des alvéoles 13 sensiblement perpendiculaires aux faces 8, 9 supérieure et inférieure.

Ce nid d'abeille peut être métallique mais de préférence il est en matière plastique tel celui commercialisé en panneaux sous la marque "NOMEX".

Ces panneaux peuvent en outre être imprégnés de résine par exemple phénolique.

La densité du matériau alvéolaire de l'âme 7 du corps et/ou la section du corps 2 peuvent varier au long du corps afin de conférer au bras le meilleur rapport entre la légèreté et la rigidité nécessaire qui, au long du bras, varie en fonction de la répartition des efforts.

Aussi, aux endroits recevant les contraintes maximales, la section et/ou la densité de l'âme pourront être majorées.

Cette majoration pourra résulter de l'insertion en ces endroits de matériau alvéolaire et/ou de mousse de plus grande densité.

Ainsi réalisé, le bras sera très léger et par exemple permettra de ramener la réaction en tête à six cents grammes environ seulement.

REVENDICATIONS

1. Bras (1) de maintien d'un conducteur aérien sous lequel doit pouvoir se déplacer à grande vitesse un dispositif d'alimentation électrique d'un mobile, lequel bras comprend un corps (2) sensiblement rectiligne dont une extrémité (3) se termine par une tête (4) à laquelle est suspendu le conducteur et dont l'autre extrémité (5) reçoit un moyen (6) en vue de son association à un support, ce bras étant CARACTERISE en ce que le corps est constitué :

- d'une âme (7) en matériau alvéolaire se présentant sous la forme d'un nid d'abeille et,

- recouvrant chacune l'une des faces supérieure (8) et inférieure (9) de l'âme (7), de deux peaux (10, 11) qui, quant à elles, sont constituées de matériau composite obtenu par polymérisation de tissus techniques imprégnés de résines.

2. Bras selon la revendication 1 caractérisé en ce que le matériau composite est à base de tissus de fibres de carbone imprégnés de résine époxy.

3. Bras selon la revendication 1 caractérisé en ce que le matériau composite est à base de tissus de fibres de verre imprégnés de résine époxy.

4. Bras selon la revendication 2 ou 3 caractérisé en ce que le tissu est choisi et orienté de manière à offrir le principal de sa résistance dans le sens longitudinal du bras.

5. Bras selon l'une quelconque des revendications 1 à 4 caractérisé en ce que le matériau alvéolaire, dont est constitué l'âme (7) du corps, est de la mousse.

6. Bras selon l'une quelconque des revendications 1 à 5 caractérisé en ce que le nid d'abeille est placé debout c'est à dire avec les axes longitudinaux (12) des alvéoles (13) sensiblement perpendiculaires aux faces (8, 9) supérieure et inférieure.

7. Bras selon l'une quelconque des revendications 1 à 6 caractérisé en ce que le nid d'abeille est métallique.

8. Bras selon l'une quelconque des revendications 1 à 6 caractérisé en ce que le nid d'abeille est en matière plastique.

9. Bras selon l'une quelconque des revendications 1 à 8 caractérisé en ce que, aux endroits recevant les contraintes maximales, le matériau alvéolaire de l'âme (7) est de densité plus forte.

10. Bras selon l'une quelconque des revendications 1 à 9 caractérisé en ce que, aux endroits recevant les contraintes maximales, le bras présente une section plus forte.

0164284

Fig: 1

3

4

2

1

5

6

Fig: 2

12

8

10

7

13

9

11

Office européen
des brevets

# RAPPORT DE RECHERCHE EUROPEENNE

EP 85 40 0911

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-3 889 788 (LITTLER)<br><br>* Colonne 1, lignes 60-67; colonne 4, lignes 12-19; figures 5-8 *<br><br>--- | 1,3-5, 10 | B 60 M 1/20<br>H 01 B 17/60 |
| A | FR-A-1 546 791 (SEDIVER)<br>* Page 1, colonne de gauche, alinées 1,2,6 *<br><br>--- | 1,3-5 | |
| A | DE-B-1 296 155 (BROWN, BOVERI)<br>* Colonne 4, lignes 21-28 *<br><br>--- | 1 | |
| A | CH-A- 358 110 (BICC)<br>* Page 2, lignes 24-34; page 3, lignes 49-55 *<br><br>--- | 2-4 | |
| | | | DOMAINES TECHNIQUES RECHERCHES (Int. Cl.4) |
| A | CH-A- 466 396 (LANGENTHA1)<br>* Colonne 1, lignes 23-25; colonne 3, lignes 25-28,32-38; colonne 4, lignes 1-7; figure 3 *<br><br>----- | 10 | B 60 M 1/00<br>B 60 M 7/00<br>H 01 B 17/00 |

Le présent rapport de recherche a été établi pour toutes les revendications

| Lieu de la recherche | Date d'achèvement de la recherche | Examinateur |
|---|---|---|
| LA HAYE | 20-08-1985 | TIELEMANS H.L.A. |